# EUROPEAN PATENT APPLICATION

(11) **EP 3 609 060 A1**
(43) Date of publication of application: **12.02.2020**
(21) Application number: 18188033.7
(22) Date of filing: 08.08.2018
(51) Int. Cl.: H02K 55/02, H02K 1/20, H02K 3/24

(54) **GENERATOR HAVING SUPERCONDUCTING COIL WINDINGS**

(71) Applicant: Siemens Gamesa Renewable Energy A/S, 7330 Brande (DK)
(72) Inventor: Groendahl, Erik, 8653 Them (DK); Soerensen, Peter Hessellund, 8740 Brædstrup (DK); Thomas, Arwyn, Cheshire, SK8 6HW (GB)
(74) Representative: Aspacher, Karl-Georg

(57) **Abstract**

It is described a generator (11) comprising a stator (20) having at least one slot (12), in which superconducting windings (13) forming a stator coil are accommodated; a rotor (30) being rotatable arranged inside or outside the stator (20); and a heat sink (16) being thermally linked to the superconducting windings (13). The heat sink (16) is configured to carry a first coolant to cool the superconducting windings (13). The heat sink (16) and the superconducting windings (13) are arranged inside a thermal shield (14) having a thermal insulating property.

## Description

### Field of invention

The present invention relates to the field of generators, particularly to generators for wind turbines.

### Art Background

In the above described technical field, it is known to use superconducting electric generators for wind turbines. The use of superconductors in wind turbines is attractive because it permits to reduce weight and/or to generate a larger amount of power.

In order to remove the heat generated in the coil, the above described superconducting generator typically includes a cooling system for reducing the coil temperature down to the cryogenic temperature, e.g. below the temperature of 77 K.

There may be therefore still a need for providing a generator, particularly for a wind turbine, including a superconducting electric generator and a cooling system for more efficiently cooling the electric generator.

There may be a need for a generator which is lightweight while providing sufficient cooling capability to maintain superconductivity in the coil windings during operation.

### Summary of the Invention

This need may be met by the subject matter according to the independent claim. The present invention is further developed as set forth in the dependent claims.

According to a first aspect of the invention, a generator comprises a stator having at least one slot, in which superconductive windings forming a stator coil are accommodated; a rotor being rotatable arranged inside or outside the stator; and a heat sink being thermally linked to the superconducting windings, the heat sink is configured to carry a first coolant to cool the superconducting windings. The heat sink and the superconducting windings are arranged in a thermal shielding having a thermal insulating property and placed in the slot. Preferably, the first coolant is configured to set the superconducting windings in a superconducting state. Such a generator is lightweight while providing sufficient cooling capability to maintain superconductivity in the coil windings during operation. The stator is cooled by preferable a second coolant to eradicate the heating effect of the iron losses caused by variable magnetic flux induction in a stator lamination.

The superconducting windings are cooled by the heat-sink which can carry liquid nitrogen (LN2) or another suitable cooling medium, to cool the superconducting windings to the required operating temperatures. The heat-sink removes any losses from the superconducting coils in operation and is wrapped in material to minimize radiation heating of the superconducting windings from the surrounding stator.

In a broad interpretation of the first aspect of the invention, the heat sink can be formed by the first coolant as such. However, it is preferred that the heat sink comprises a support member, which supports the superconducting windings and further has a cooling channel, which is configured to receive and carry the first coolant.

Preferably, the stator comprises additional cooling pipes which are configured to carry a second coolant which preferable is different from the first coolant. The additional cooling pipes can be arranged separately from the heat sink. More preferably, the additional cooling pipes carry a water/glycol solution, and they remove iron loss during operation. More preferred, the first coolant is provided to cool the superconducting windings below a first temperature and the second coolant is provided to cool the stator below a second temperature, wherein the first temperature is lower than the second temperature. The heat sink and the additional cooling pipes thus provide a two stage cooling system of different temperature stages so that the cooling efficiency is improved.

Preferably, the superconducting windings are superconducting at a temperature which is equal to or lower than the first temperature, and wherein the superconducting windings are not superconducting at a temperature which is equal to or higher than the second temperature.

Preferably, the stator is at least partly accommodated in a vacuum vessel, the vacuum vessel being made of a material which is permeable to a magnetic field. Since the stator is encapsulated in the vacuum vessel, convective heating of the superconducting windings is minimized.

Preferably, the stator comprises a plurality of laminated stator segments, which can minimize undesired eddy currents in the stator. The laminated stator segments can be that part of the stator which is accommodated in the vacuum vessel.

Preferably, the stator comprises an iron core to minimize the magnet circuit reluctance.

Preferably, at least one pump and at least one heat exchanger are provided which are configured to pump at least one of the first and second coolants through the heat sink and/or the additional cooling pipes and to perform a heat transfer from at least one of the first and second coolants to another medium. Alternatively, heat transfer from at least one of the first and second coolants to another medium is performed by convective flow and/or heat convection.

According to a second aspect of the invention, the generator is used in a wind turbine.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows schematically and partially in a longitudinal section a wind turbine including an electric generator and a cooling system according to the present invention; and
- Fig. 2: shows a schematic, partial cross section through a stator of the generator according to an embodiment of the present invention.

### Detailed Description

The illustrations in the drawings are schematically. It is noted that in different figures, similar or identical elements are provided with the same reference signs.

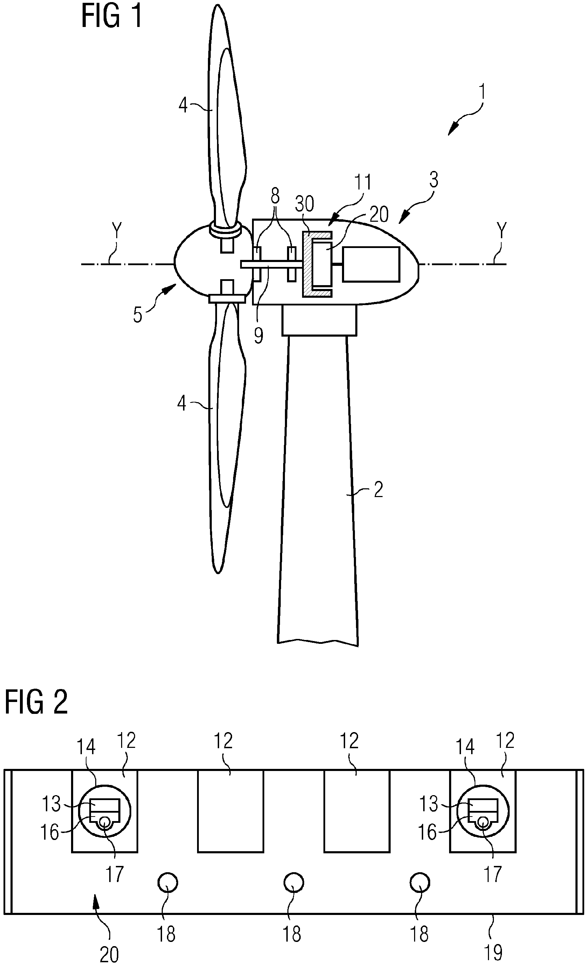

**Fig. 1** shows schematically and partially in a longitudinal section a wind turbine 1 including an electric generator 11 and a cooling system according to the present invention. The wind turbine 1 comprises a tower 2 which is mounted on a non-depicted fundament. A nacelle 3 is arranged on top of the tower 2.

The wind turbine 1 further comprises a wind rotor 5 having two, three or more blades 4 (in the perspective of Fig. 1, only two blades 4 are visible). The wind rotor 5 is rotatable around a rotational axis Y. If not differently specified, the terms axial, radial and circumferential in the following are made with reference to the rotational axis Y.

The blades 4 extend radially with respect to the rotational axis Y.

The wind turbine 1 comprises a permanent magnet electric generator 11. According to other possible embodiments of the present invention (not represented in the attached figures), the present invention may be applied to any other type of electric machine with either internal or external rotor and with any type of field excitation (e.g. permanent magnets or DC coils).

The wind rotor 5 is rotationally coupled with the generator 11 either directly, e.g. direct drive or by means of a rotatable main shaft 9 and through a gear box (not shown in Fig. 1). A schematically depicted bearing assembly 8 is provided in order to hold in place the main shaft 9 and the rotor 5. The rotatable main shaft 9 extends along the rotational axis Y.

The electric generator 10 includes a stator 20 and a rotor 30. The rotor 30 is rotatable with respect to the stator 20 about the rotational axis Y. In the embodiment, the rotor 30 is rotatable arranged outside the stator 20. The rotor 30 has a plurality of permanent magnets (not shown).

**Fig. 2** shows a schematic, partial cross section through the stator 20 of the generator 11 according to an embodiment of the present invention. The stator 20 has a plurality of slots 12, in which superconducting windings 13 forming a stator coil are accommodated. The stator coil of the stator 20 faces the rotor 30. When the rotor 30 is rotated with respect to the stator 20 having the stator coil, an AC current is produced in the stator coil.

A heat sink 16, which is thermally linked to the superconducting windings 13, is arranged in the slots 12. The heat sink 16 is configured to carry a first coolant to cool the superconducting windings 13. The first coolant serves to cool the superconducting windings 13. The first coolant is configured to set the superconducting windings 13 in a superconducting state. The heat sink 16 and the superconducting windings 13 are arranged in a thermal shielding 14 having a thermal insulating property. Such a material can be any appropriate material having a thermal insulating property.

In a broad interpretation, the heat sink 16 can be established by the first coolant as such. Alternatively, as shown in the embodiment, the heat sink 16 comprises a support member, which supports the superconducting windings 13 and has a cooling channel 17, which is configured to receive the first coolant. The cooling channel 17 has a circular cross section; however, the cooling channel 17 may likewise have a rectangle cross section or any other cross section. Since the superconducting windings 13 are usually made of a material, which can be set in a superconductive state, the superconducting windings 13 are often made of a refractory material for example a type of ceramics without sufficient firmness. Since the superconducting windings 13 are supported by the heat sink 16 which also can act as a support member, which is usually formed of a firmer material such as metal, the superconducting windings 13 are protected and less likely damaged.

This structure is efficient and lightweight while providing sufficient cooling capability to maintain superconductivity in the superconducting windings 13 of the stator coil during operation.

The stator 20 comprises additional cooling pipes 18 which are configured to carry a second coolant being preferable different from the first coolant. In the embodiment, the additional cooling pipes 18 are placed within the stator iron core. It can also be placed at other locations which would provide sufficient thermal contact to the stator core also. While the first coolant is provided to cool the superconducting windings 13 below a first temperature, the second coolant is provided to cool the stator 20 below a second temperature, wherein the first temperature is lower than the second temperature. While the superconducting windings 13 are superconducting at a temperature which is equal to or lower than the first temperature, the superconducting windings 13 may be not superconducting at a temperature which is equal or higher than the second temperature. Such superconducting windings 13 are also called as HTS (*High Temperature Superconductor*) although they can also be LTS (*Low temperature Superconductors*).

The superconducting windings 13 can have a superconductivity of the second order. Superconductors of the second order are, up to the so-called "lower critical magnetic field", in the so called Meissner phase and behave like a superconductor of the first order. With higher magnetic fields, magnetic field lines in the form of so-called flux tubes can penetrate the material before the superconducting state at an "upper critical magnetic field" is completely destroyed. The magnetic flux in a flux tube is usually equal to the magnetic flux quantum.

The first temperature can be -196°C or lower, preferably
-206°C or lower. The first coolant can be liquid nitrogen (LN or LN₂), liquid helium (⁴He or ³He) or any other coolant which is suitable for cooling below the first temperature.

The second temperature can be -20°C or lower, preferably
-50°C or lower. The second coolant can be water, glycol, ethanol, a mixture thereof or any other coolant which is suitable for cooling below the second temperature.

Since the stator 20 is relatively large, for example for the wind turbine 1 having an output power higher than 1 MW, it comprises a plurality of laminated stator segments. The laminated stator segments can minimize eddy currents. Alternatively, the stator 20 can be made as single piece, for example for a smaller wind turbine having a smaller output power.

The laminated stator segments of the stator 20 are accommodated in a vacuum vessel 19 as shown in Fig. 2. The vacuum vessel 19 is made of a material which is permeable to a magnetic field. This is because the generator 11 uses the magnetic field which is produced between the stator coil of the stator 20 and the rotor 30. The magnetic flux must pass the vacuum vessel 19. The material of the vacuum vessel 19 can be selected from a non-magnetic material such as aluminum or stainless steel, or some kind of plastic or fiber material. A further thermal insulation of the stator 20 is achieved by an airgap which is present between the rotor 30 and the stator coil of the stator 20.

The stator 20 comprises preferable an iron core disposed radially inside the laminated stator segments. The iron core minimizes the magnetic circuit reluctance.

The additional cooling pipes 18 can be arranged within this stator core and/or the laminated stator segments.

In order to move the first and second coolants, two pumps (not shown) are provided which are configured to pump the first and second coolants through the heat sink 16 and the additional cooling pipes 18, respectively. Furthermore, the heat sink 16 and the additional cooling pipes 18 are connected to one or more heat exchangers (not shown) to achieve heat exchange between the first and second coolants and the ambient or another medium. Such heat exchange is already known in the state of the art and does not need to be described further. Alternatively, convective flow could be used without pumps.

Advantageously, the present invention is capable to cool the stator 20 to eradicate a heating effect of iron losses caused by variable magnetic flux inductions in the laminated stator segments of the stator 20 and to sufficiently cool the superconducting windings 13 to make them superconducting. The laminated stator segments are encapsulated in the vacuum vessel 19 to minimize convective heating of the superconducting windings 13.

In addition, a two stage cooling is implemented to cool the stator 20 via the expanded cooling pipes 18 with a water/glycol solution (or a similar coolant) to cool the stator 20 and remove iron loss during operation. The superconducting windings 13 are then further cooled by the adjacent heat-sink 16 incorporating the cooling channel 17 which carries liquid nitrogen (LN2) or another suitable coolant to further cool the superconducting windings 13 to the required operating temperatures. The heat-sink 16 removes any losses from the superconducting windings 13 in operation and is wrapped in the thermal shield 14 made of a material to minimize radiation heating of the superconducting windings 13 from the surrounding stator 20.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A generator (11) comprising:
a stator (20) having at least one slot (12), in which superconducting windings (13) forming a stator coil are accommodated;
a rotor (30) being rotatable arranged inside or outside the stator (20); and
a heat sink (16) being thermally linked to the superconducting windings (13), the heat sink (16) is configured to carry a first coolant to cool the superconducting windings (13); wherein
the heat sink (16) and the superconducting windings (13) are arranged inside a thermal shield (14) having a thermal insulating property and placed in the slot (12).

2. The generator (11) according to the preceding claim,
wherein the heat sink (16) comprises a support member, which supports the superconducting windings (13) and has a cooling channel (17), which is configured to receive the first coolant.

3. The generator (11) according to any one of the preceding claims,
wherein the stator (20) comprises additional cooling pipes (18) which are configured to carry a second coolant.

4. The generator (11) according to the preceding claim,
wherein the first coolant is provided to cool the superconducting windings (13) below a first temperature and the second coolant is provided to cool the stator (20) below a second temperature, wherein the first temperature is lower than the second temperature.

5. The generator (11) according to the preceding claim,
wherein the superconducting windings (13) are superconducting at a temperature which is equal to or lower than the first temperature, and wherein the superconducting windings (13) are not superconducting at a temperature which is equal to or higher than the second temperature.

6. The generator (11) according to any one of the preceding claims,
wherein the stator (20) is at least partly accommodated in a vacuum vessel (19), the vacuum vessel (19) being made of a material which is permeable to a magnetic field.

7. The generator (11) according to any one of the preceding claims,
wherein the stator (20) comprises a plurality of laminated stator segments.

8. The generator (11) according to any one of the preceding claims,
wherein the stator (20) comprises an iron core.

9. The generator (11) according to any one of the preceding claims,
wherein at least one pump and at least one heat exchanger are provided which are configured to pump at least one of the first and second coolants through the heat sink (16) and/or the additional cooling pipes (18) and to perform a heat transfer from at least one of the first and second coolants to another medium.

10. The generator (11) according to any one of the preceding claims,
wherein heat transfer from at least one of the first and second coolants to another medium is performed by convective flow and/or heat convection.

11. A wind turbine (1) comprising the generator (11) according to any one of the preceding claims.
